(19) Europäisches Patentamt

European Patent Office

Office européen des brevets

(11) Veröffentlichungsnummer: **0 336 120**
**A2**

(12) **EUROPÄISCHE PATENTANMELDUNG**

(21) Anmeldenummer: 89103806.9

(22) Anmeldetag: 03.03.89

(51) Int. Cl.⁴: **F26B 13/10 , F26B 3/30 ,
F26B 21/06 , F26B 23/10**

(30) Priorität: 07.04.88 DE 3811620

(43) Veröffentlichungstag der Anmeldung:
**11.10.89 Patentblatt 89/41**

(84) Benannte Vertragsstaaten:
**AT BE CH DE ES FR GB GR IT LI LU NL SE**

(71) Anmelder: **VITS-Maschinenbau GmbH
Winkelsweg 172
D-4018 Langenfeld(DE)**

(72) Erfinder: **von Kwiatkowski, Kurt, Dr.
Hardtbergstrasse 20
D-5300 Bonn(DE)**
Erfinder: **Gorissen, Erich
Am Hang 22
D-5653 Leichlingen(DE)**
Erfinder: **Unger, Udo
Karl-Huschens-Strasse 6
D-5653 Leichlingen(DE)**

(74) Vertreter: **Patentanwaltsbüro Cohausz &
Florack
Postfach 10 01 20
D-4000 Düsseldorf 1(DE)**

(54) **Vorrichtung zur Wärmebehandlung und/oder Trocknung einer Materialbahn im Durchlauf.**

㉗ Die Erfindung bezieht sich auf eine Vorrichtung zur Wärmebehandlung und/oder Trocknung einer Materialbahn 1 im Durchlauf. Dabei wird die Materialbahn 1 ein- oder beidseitig mit Infrarotstrahlung behandelt. Die Infrarotstrahler 6,7 lassen sich in ihrer Strahlungsleistung über die Breite der Materialbahn 1 dadurch einstellen, daß sie von einer Vielzahl von einzelnen parallel zur Materialbahn 1 geführten Heißgasströmen beheizt werden, die auf unterschiedliche Temperatur eingestellt oder mit unterschiedlicher Strömungsgeschwindigkeit über die Rückseite von Abstrahlplatten 6a,7a der Infrarotstrahler 6,7 streichen können.

Fig. 1

## Vorrichtung zur Wärmebehandlung und/oder Trocknung einer Materialbahn im Durchlauf

Die Erfindung betrifft eine Vorrichtung zur Wärmebehandlung und/oder Trocknung einer Materialbahn, bestehend aus Führungs- und Transportmitteln für die Materialbahn, aus zu einer oder beiden Seiten der Materialbahn mit Abstand von ihr angeordneten und sich über deren Breite und in deren Längsrichtung erstreckenden Infrarotstrahlern, die von auf den Rückseiten ihrer Abstrahlplatten angeordneten, heizmitteldurchströmten und in der Heizleistung einstellbaren Kanälen beheizbar sind.

Es ist bekannt, Materialbahnen in mit aufgeheizter Luft betriebenen Durchlauftrocknern zu trocknen. Charakteristisch für diese Trocknung ist, daß große Luftvolumina auf die Materialbahn geblasen und im Trocknergehäuse umgewälzt werden. Damit die Materialbahn durch diese aufgeblasene Luft in ihrer Qualität nicht negativ beeinflußt wird, muß die Luft absolut frei von auch kleinsten Fremdkörpern sein.

Diese Trocknungsart erlaubt zwar hohe Trocknungsleistungen, doch sind mit ihr auch wegen der großen Luftvolumina Nachteile verbunden. Wegen der großen Luftvolumina müssen die diese Luftvolumina verarbeitenden Teile, wie Reinigungsvorrichtungen, Gebläse und dergleichen, entsprechend voluminös ausgelegt sein.

Um diese Schwierigkeiten zu umgehen, sind Verfahren und Vorrichtungen der eingangs genannten Art bekannt, bei denen die für die Wärmebehandlung und/oder Trocknung benötigte Wärmebeaufschlagung der Materialbahn durch die Strahlung von Infrarotstrahlern erfolgt.

Bei einer bekannten Vorrichtung dieser Art (DE 19 19 957 C2) bestehen die Infrarotstrahler aus Abstrahlplatten, die unmittelbar von mit Gas betriebenen Brennern beheizt werden und deren Infrarotstrahlung durch zwischen ihnen und der Materialbahn angeordnete Siebe vergleichmäßigt wird.

Bei einer anderen, gattungsgleichen Vorrichtung (EP 0 157 403 A3) bestehen die Infrarotstrahler aus Platten, die auf ihrer der Materialbahn abgewandten Seite serpentinenförmig verlegte Leitungen, beispielsweise für ein Thermalöl, tragen. Um die Materialbahn mit unterschiedlicher Strahlungsleistung über deren Breite beaufschlagen zu können, sind mehrere mäanderförmig verlegte Leitungszüge parallel zueinander und zur Laufrichtung der Materialbahn angeordnet. Eine solche für die Beheizung mit Thermalöl ausgelegte Vorrichtung erfordert einen großen vorrichtungstechnischen Aufwand. Eine besonders feinfühlige Temperatursteuerung läßt sich mit mäanderförmig verlegten von Thermalöl durchströmten Leitungen nicht erreichen.

Schließlich sind Infrarotstrahler für Trocknungsöfen bekannt (DT 1 604 766 A1), deren Strahlungskörper mit über dessen Rückseite geleiteten heißen Gasen aufgeheizt wird. In diesem Fall ist eine über die gesamte Breite des Strahlungskörpers einheitliche Kammer für die Führung der heißen Gase vorgesehen. Um bei unterschiedlichem Wärmebedarf über die Abstrahlfläche unterschiedliche Strahlungsleistung erbringen zu können, ist vorgesehen, die Strömungsgeschwindigkeit der heißen Gase durch den längs des Strahlungskörpers geführten Kanal durch unterschiedliche Querschnitte zu beeinflussen. Wegen der dann festliegenden Querschnitte ist eine Veränderung der Wärmeabstrahlung der einzelnen Teilflächen des Strahlkörpers im Betrieb jedoch nicht möglich.

Der Erfindung liegt die Aufgabe zugrunde, eine Vorrichtung der eingangs genannten Art zu schaffen, die in Betrieb eine feinfühlige Anpassung der Strahlungsleistung an die jeweilige Breite der zu behandelnden Materialbahn ermöglicht.

Diese Aufgabe wird erfindungsgemäß dadurch gelöst, daß die Kanäle als Heißluftkanäle ausgebildet und eine Vielzahl solcher Heißluftkanäle parallel zueinander und in Durchlaufrichtung der Materialbahn verlaufend vorgesehen sind und daß den Heißluftkanälen Steuerungsmittel, mit denen die Strömungsgeschwindigkeit und/oder die Temperatur der Heißluft in den einzelnen Heißluftkanälen einstellbar ist, und/oder an deren Rückseiten angeordnete Heiz- oder Kühleinrichtungen zugeordnet sind, die in ihrer Heiz- bzw. Kühlleistung einstellbar sind.

Bei der Erfindung erfolgt im Unterschied zu den Vorrichtungen zur Wärmebehandlung und/oder Trocknung einer Materialbahn im Durchlauf gemäß dem Stand der Technik die Beheizung der Infrarotstrahler nicht durch direkte Beaufschlagung der Abstrahlplatten mit den Brennergasen (DE 19 19 957 C2) oder durch ein hocherhitzbares Thermalöl (EP 0 157 403 A3), sondern durch Heißluft. Durch die Aufspaltung der Heißluft in eine Vielzahl von parallelen Heißgasströmen ist es möglich, sich feinfühlig den über die Breite der Materialbahn unterschiedlichen Temperaturerfordernissen anzupassen, so daß die Materialbahn über die Breite gleichmäßig wärmebehandelt beziehungsweise getrocknet wird. Die Beheizung der Infrarotstrahler durch die Heißgasströme bringt den weiteren Vorteil, daß man über die Heißgasströme in den Kanälen eine zusätzliche Regelgröße gewinnt, die eine sehr feinfühlige Einstellung der Temperatur des Infrarotstrahlers über die Breite und auch über die Länge ermöglicht, denn mit den rückseitig angeordneten Heiz- und Kühlelementen ist die Strahlungsleistung der Infrarotstrahler nicht nur über die Breite, sondern auch über die Länge einstellbar. Der von den Heißgasströmen an die Infrarotstrahler abgegebene Wärmestrom kann nämlich durch Nachbeheizung der Heißgasströme gehalten oder sogar verstärkt werden. Mit dieser Nachbeheizung trägt man der aus der Praxis bekannten Tatsache Rechnung, daß Heißgasströme rasch ihren Wärmeinhalt an die Infrarotstrahler abgeben und abkühlen. Will man also luftbeheizte Infrarotstrahler realisieren, die über die Länge der Materialbahn eine gleiche, in Sonderfällen sogar eine ansteigende oder gar stark abfallende, auf jeden Fall eine exakt beeinflußbare Abstrahlungsleistung haben, dann ist dies mit den rückseitig angeordneten Heizelementen zu erreichen, die verschieden ausgestaltet sein können, wie noch im einzelnen zu erläutern sein wird. In entsprechender Weise lassen sich bei Bedarf die Heißgasströme auch kühlen.

Bei der Erfindung wird auch bewußt auf Thermalöl verzichtet, weil in manchen Fällen das Thermalöl äußerst schädlich ist und ein erhebliches Betriebsrisiko darstellt. Selbst kleine Ölmengen, die aus winzigen Poren austreten, können ausreichen, um die Luft im Trockner derart zu kontaminieren, daß eine zumindest monomolekulare Schicht die zu trocknende Warenbahn belegt. Diese vielfach beobachtete Eigenschaft hochsiedender Kohlenwasserstoffe führt dazu, daß die Oberfläche der in öldampfhaltiger Atmosphäre getrockneten Warenbahn mit anderen Bahnen, zum Beispiel Kupferfolien, nur ungenügend fest verklebt werden kann. Die Belegung der Oberfläche mit Kohlenwasserstoffmolekülen wirkt nämlich als Trennschicht.

Sobald die Materialbahn bei der Wärmebehandlung und/oder Trocknung flüchtige Stoffe abgibt, ist es erforderlich, diese abzuführen. Zu diesem Zweck ist vorzugsweise durch den Zwischenraum zwischen der Materialbahn und dem Infrarotstrahler eine Gasströmung parallel zur Materialbahn geführt. Zur Abfuhr der freigesetzten Stoffe sollte ein mit diesen Stoffen beladbares Gas, insbesondere Frischluft, in den Zwischenraum geleitet werden, das dann als Abluft einem Ausgang zugeführt wird. Handelt es sich bei den freigesetzten flüchtigen Stoffen um rückgewinnbare Lösungsmittel, so wird für die Abfuhr vorzugsweise ein Inertgas oder ein Inertgassauerstoffgemisch verwendet, das einen so niedrigen Sauerstoffgehalt haben sollte, daß eine Explosion bei Mischung mit den brennbaren Lösungsmitteln sicher verhindert wird.

Zur Steuerung der Strahlungsleistung bei nebeneinander angeordneten Heißgaskanälen sind an den Ein- und/oder Ausgängen der Heißgaskanäle einzeln ansteuerbare Ventile vorgesehen. Alternativ oder zusätzlich können den Heißgaskanälen Heizund/oder Kühleinrichtungen vor und/oder hinter den Eingängen zugeordnet sein, mit denen die Heißgase aufheizbar und/oder abkühlbar sind.

Die Nachbeheizung der Heißgase kann nach einer Ausgestaltung der Erfindung durch an den Rückwänden der Heißgaskanäle wirksame Heizeinrichtungen, insbesondere Infrarotstrahler, Brenner oder Wärmetauscher, verwirklicht sein. Umgekehrt lassen sich die durch die Kanäle geleiteten Gase auch kühlen. Dies kann durch auf die Rückwände aufgeblasene Kühlluft oder Wärmetauscher geschehen.

Die die Vorderwand bildende Abstrahlplatte, aber auch die Rückwand des beziehungsweise der Heißgaskanäle ist vorzugsweise von einer geschlossenen Wand oder in Sonderfällen einem feinmaschigen Sieb und/oder Glas gebildet. Sofern die Vorderwand von einer geschlossenen Wand gebildet ist, können in Längsrichtung durch den beziehungsweise die Heißgaskanäle sich erstreckende, mit der Vorderwand wärmeleitend verbundene Stege (Rippen) aus wärmeleitendem Material vorgesehen sein. Dadurch wird die Übertragung der Wärme von den Heißgasen auf die abstrahlende Vorderwand verbessert. Die Übertragung der Wärme von den Heißgasen auf die abstrahlende Vorderwand ist besonders wirksam, wenn die Stege einen konischen Querschnitt haben, dessen breitere Basis mit der Vorderwand verbunden ist. In Sonderfällen ist die Rückwand der Heißgaskanäle selbst wärmeleitend und wärmeleitend mit den Stegen verbunden. In diesem Fall können durch Beheizung der Rückwand die Heißgasströme nachbeheizt werden. Diese wärmeleitende Ausgestaltung ist beim Einsatz von Kühleinrichtungen ebenso wirksam.

Nach einer weiteren Ausgestaltung der Erfindung ist zur Beheizung des und/oder der Heißgaskanäle eine Brennerkammer oder ein Wärmetauscher vorgesehen. Vorzugsweise liegen der beziehungsweise die Heißgaskanäle in einem Heißgaskreislauf mit der Brennerkammer beziehungsweise dem Wärmetauscher. Die Brennerkammer beziehungsweise der Wärmetauscher können dazu verwendet werden, daß die für die Abfuhr von flüchtigen Stoffen in den Zwischenraum eingeleiteten beladbaren Gase erwärmt werden. Dies ist auf einfache Art und Weise dadurch möglich, daß von dem Ausgang der Brennerkammer beziehungsweise des Wärmetauschers eine Abzweigung zu dem Eingang des einen Kanal bildenden Zwischenraums zwischen den Infrarotstrahlern und der Materialbahn führt. Alternativ kann der Eingang des einen Kanal bildenden Zwischenraumes mit einer Kammer verbunden sein, deren hindurchströmende beladbare Gase durch einen Brenner oder einen Wärmetauscher vorgewärmt beziehungsweise gekühlt werden.

Zur Stabilisierung der Führung der Materialbahn in dem Zwischenraum sind nach einer weiteren Ausgestaltung der Erfindung die Materialbahn beaufschlagende Blasdüsen in dem Zwischenraum vorgesehen.

Mit der erfindungsgemäßen Vorrichtung läßt sich eine Materialbahn optimal wärmebehandeln und/oder trocknen. Wie bereits ausgeführt, ist es in bestimmten Fällen günstig, den Zwischenraum zwischen den Infrarotstrahlern und der Materialbahn mit einem Gas zu durchströmen, welches in einem separaten Wärmetauscher aufgewärmt oder gekühlt und von einem separaten Gebläse gefördert wird. Dies ist vor allem dann der Fall, wenn an die Reinheit und die Temperatur und die Zusammensetzung des Gases besondere Anforderungen gestellt werden. Durch das separat zu regelnde Gebläse läßt sich der Gasstrom besonders sorgfältig dosieren. Dadurch wird zum Beispiel vermieden, daß dünne Materialbahnen flattern oder schlagen (sogenannter sailing-effect).

Handelt es sich bei den bei der Wärmebehandlung und/oder Trocknung von der Materialbahn abgegebenen flüchtigen Stoffen um brennbare Lösungsmittel, so besteht Explosionsgefahr, wenn luft- oder sauerstoffhaltige Gase Verwendung finden. Durch Verwendung von Abgasen aus Verbrennungsvorgängen, von inertisierter Luft oder von Inertgas als Spülmedium wird die Explosionsgefahr verringert und bei vielen Lösungsmitteln je nach Lage des Explosionsbereiches bereits verhindert. Liegen die Preise für die Lösungsmittel erheblich über den Öl- oder Gaspreisen, so lohnt sich eine Rückgewinnung. In solchen Fällen gestattet die Erfindung vorteilhaft die Verwendung von Inertgasen ($N_2$,$CO_2$) als Spülgase.

Die Lösungsmittel können zusammen mit den Inertgasen in dem separaten Kreislauf gefahrlos abgeführt werden, da erfindungsgemäß der Spülluftkreislauf völlig von dem Heißgaskreislauf getrennt ist. Lediglich bei Eintritt und Austritt der Materialbahn in den Behandlungsraum sind sogenannte Pufferzonen nötig, in denen durch geeignete Vorrichtungen eine Mischung zwischen Spülgasen und Außenluft vermieden wird.

In einigen Anwendungsfällen hat sich gezeigt, daß es zweckmäßig ist, die Materialbahn zur Wärmebehandlung und/oder Trocknung Infrarotstrahlungen hoher (Anregungs-) Energie auszusetzen. Erfindungsgemäß werden zu diesem Zwecke die folgenden Maßnahmen ergriffen: Für die Behandlung der Materialbahn mit energiereichen Infrarotstrahlen, wie sie von hellrotglühenden Abstrahlplatten abgegeben werden, werden Heizeinrichtungen eingesetzt, zum Beispiel gasbeheizte Infrarotstrahler. Diese an sich bekannte Technik, bei der die Infrarotstrahlung der Abstrahlplatten direkt auf die Materialbahn wirkt, wird erfindungsgemäß abgewandelt und dadurch entscheidend verbessert, daß zwischen der hellroten Strahlungsfläche der Abstrahlplatte des Infrarotstrahlers, die eine Temperatur oberhalb der Zündtemperatur des Lösungsmittels hat, und der Materialbahn zwei genau definiert regelbare Heißgasströme zwischengeschaltet werden, und zwar der Gasstrom zwischen der Materialbahn und der Abstrahlplatte und der Heißgasstrom in den Heißgaskanälen. Bestehen beispielsweise die vorderen und hinteren Begrenzungen der Heißgaskanäle aus einem Sieb, zum Beispiel aus Drahtgewebe, so kann durch Einstellung der einzelnen Heißgasströme in den parallel verlaufenden Heißgaskanälen das Temperaturprofil über die Breite sehr genau eingestellt und Temperaturspitzen (Überhitzungen) in Richtung des Verlaufs der Materialbahn vergleichmäßigt werden. Im Raum zwischen der Materialbahn und der als Sieb ausgebildeten Abstrahlplatte wird erfindungsgemäß ein Abgas oder Inertgas geleitet. Bei feinfühliger Einstellung der Strömungsverhältnisse in dem Raum zwischen der Materialbahn und der als Sieb ausgebildeten Abstrahlplatte und in den Heißgaskanälen läßt sich sicher erreichen, daß ein Eindringen großer Lösungsmittelmengen durch das die Abstrahlplatte bildende Sieb und die ebenfalls als Sieb ausgebildete Rückwand hindurch bis in den Bereich der hochtemperierten Oberflächen verhindert wird. Ein Durchzünden durch die siebartigen Platten beziehungsweise Wände hindurch läßt sich verhindern, wenn das Sieb so feinmaschig gewählt wird, daß der Löschabstand unterschritten ist (Prinzip Grubenlampe).

Wenn auch ein Teil der energiereichen Infrarotstrahlung an den feinmaschigen Sieben absorbiert und langwellig abgestrahlt wird, ist doch insgesamt ein Einfall energiereicher Infrarotstrahlung auf die Materialbahn festzustellen. Dieser Einfall energiereicher Infrarotstrahlung ist durch den Erfindungsgedanken sowohl in die Breite als auch über die Länge der Warenbahn erheblich besser vergleichmäßigt, wobei die Explosionsgefahr erheblich reduziert ist.

Bei zahlreichen Produkten hat sich bewährt, daß nach einer Wärmebehandlung und/oder Trocknung bei hoher Temperatur sich eine Zone des sogenannten Temperns bei etwas niederer Temperatur anschließt. Dies kann einmal dadurch geschehen, daß der Gasstrom zwischen Materialbahn und Infrarotstrahlern gekühlt eingeführt wird. Will man jedoch eventuell mögliche Kondensationsprozesse an den Oberflächen der Materialbahn mit Sicherheit vermeiden, so ist es zweckmäßig, die Materialbahn auf ihrem weiteren Verlauf zwischen Infrarotstrahlern mit sehr langwelliger Infrarotstrahlung zu behandeln. Dadurch werden die gewünschten Reaktionen der Wärmebehandlung erreicht, ohne daß Kondensationen zu befürchten sind. Eine Kombination beider Vorgehensweisen hat sich als zweckmäßig erwiesen.

Im folgenden wird die Erfindung anhand einer Zeichnung näher erläutert. Im einzelnen zeigen:

Fig. 1 einen Teil einer Vorrichtung zur Wärmebehandlung beziehungsweise Trocknung einer Materialbahn im Durchlauf im Längsschnitt,

Fig. 2 den in Fig. 1 dargestellten Teil im Querschnitt nach Linie A-A der Fig. 1,

Fig. 3 den in Fig. 1 dargestellten Teil im Längsschnitt nach der Linie B-B der Fig. 1,

Fig. 4 einen zu Fig. 1 abgewandelten Teil einer Vorrichtung zur Wärmebehandlung beziehungsweise Trocknung einer Materialbahn im Durchlauf im Längsschnitt,

Fig. 5 einen zu Fig. 1 und Fig. 2 abgewandelten Teil einer Vorrichtung zur Wärmebehandlung beziehungsweise Trocknung einer Materialbahn im Durchlauf im Längsschnitt,

Fig. 6 eine aus mehreren Teilen bestehende Vorrichtung zur Wärmebehandlung beziehungsweise Trocknung einer Materialbahn im Durchlauf im Längsschnitt,

Fig. 7 einen heißluftbeheizten Infrarotstrahler im Querschnitt,

Fig. 8 einen heißluftbeheizten Infrarotstrahler in einer zu Fig. 7 anderen Ausführung im Querschnitt und

Fig. 9 einen heißluftbeheizten Infrarotstrahler in einer zu Fig. 7 und 8 anderen Ausführung im Querschnitt.

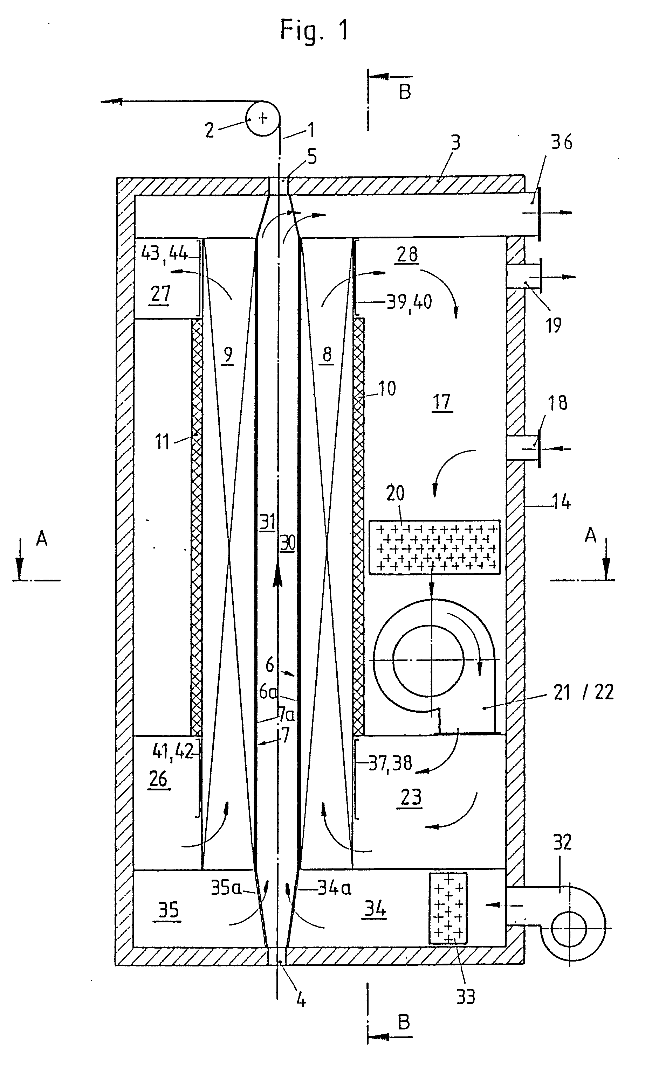

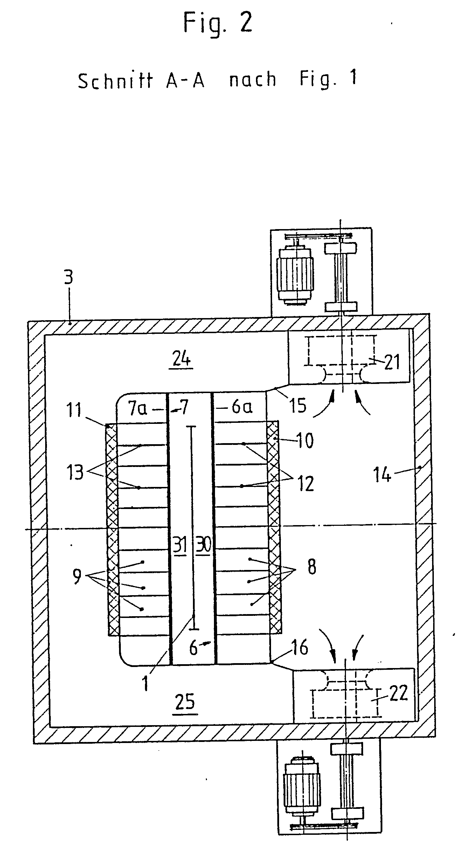

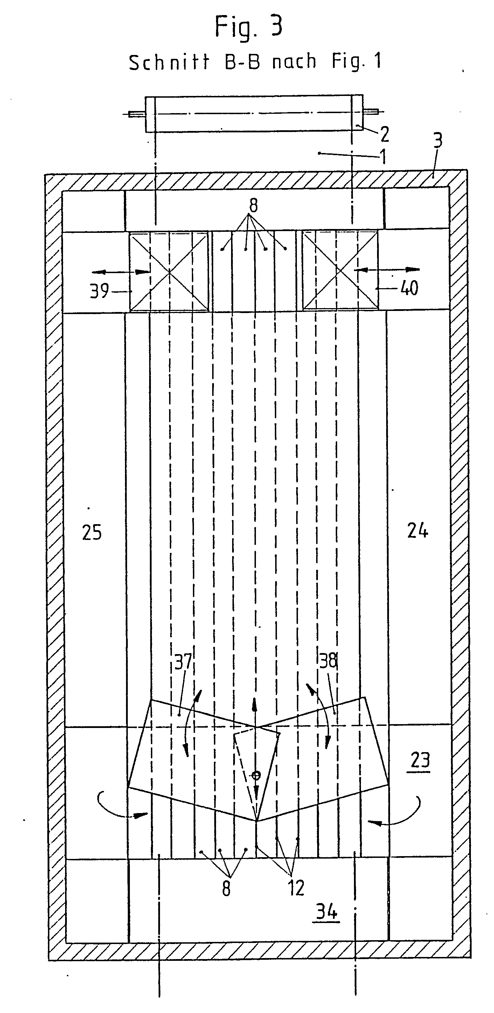

Die Vorrichtung zur Wärmebehandlung einer Materialbahn 1 gemäß Fig. 1 weist Führungs- und Transportmittel für die Materialbahn 1 auf, von denen hier nur eine obere Umlenkrolle 2 dargestellt ist, ein Gehäuse 3 mit einem Einlaßschlitz 4 und einem Auslaßschlitz 5 für die Materialbahn 1 und im Gehäuse 3 beidseitig der Materialbahn 1 angeordnete Infrarotstrahler 6,7.

Die Infrarotstrahler 6,7 erstrecken sich in Längsrichtung der Materialbahn 1 und sind von ihr mit Abstand angeordnet. Jeder Infrarotstrahler 6,7 weist eine Abstrahlplatte 6a,7a in Form eines Metalls, eines Metalls mit besonders behandelter Oberfläche, eines Spezialglases oder eines feinmaschigen Siebes auf. Diese Abstrahlplatte 6a,7a oder dergleichen begrenzt auf ihrer der Materialbahn 1 abgekehrten Rückseite eine Vielzahl von parallel zueinander und sich in in Längsrichtung der Materialbahn 1 erstreckenden Heißgaskanälen 8,9. Die Rückwände der Heißgaskanäle 8,9 werden von Platten 10,11 begrenzt, die je nach Zweck isolierend oder gut wärmeleitend oder in Form eines Glases oder engmaschigen Siebes ausgeführt sein können. Die Trennwände 12,13, die gemäß Fig. 2 die Heißgaskanäle 8,9 voneinander trennen, bestehen vorzugsweise aus wärmeleitendem Material und sind wärmeleitend mit den vorderseitigen Abstrahlplatten 6a,7a und/oder mit den wärmeleitenden Platten 10,11 verbunden. Dadurch werden einerseits die Wärmeübertragung von dem die Heißgaskanäle 8,9 durchströmenden Medium auf diese Abstrahlplatten 6a,7a und andererseits die Wärmeübertragung mittelbar von den beheizten oder gekühlten Platten 10,11 über das Medium auf die Abstrahlplatten 6a,7a und unmittelbar über die Trennwände 12,13 verbessert.

Die Rückwand 10 bildet mit einer gegenüberliegenden Wand 14 des Gehäuses 3 und im Gehäuse 3 liegenden Seitenwänden 15,16 eine Kammer 17, in die über einen Einlaß 18 Frischluft eingeleitet und über einen Auslaß 19 Abluft abgeleitet werden. Die Atmosphäre der Kammer 17 ist durch einen Wärmetauscher 20 aufheizbar, dessen Heißgase mittels Gebläsen 21,22 über einen Verteilerraum 23 den Heißgaskanälen 8 und über Kanäle 24,25 und einen Verteilerraum 26 den Heißgaskanälen 9 zugeleitet werden.

Nachdem die Heißgase die Heißgaskanäle 8,9 durchströmt haben, werden sie über Sammelräume 27,28 und nicht dargestellte Kanäle zurück in die Kammer 17 geleitet.

Um die in Zwischenräumen 30,31 zwischen der Materialbahn 1 und den Infrarotstrahlern 6,7 beim Trocknen flüchtig gewordenen Stoffe abzuführen, wird über einen Frischlufteinlaß 32 mittels Gebläse Frischluft über einen Wärmetauscher 33 in Verteilerräume 34,35 geleitet, aus denen dann die Heißgase über Verteilungssiebe 34a,35a in die Zwischenräume 30,31 gelangen. Diese Heißgase nehmen die flüchtig gewordenen Stoffe auf und führen sie über einen Abluftauslaß 36 ab.

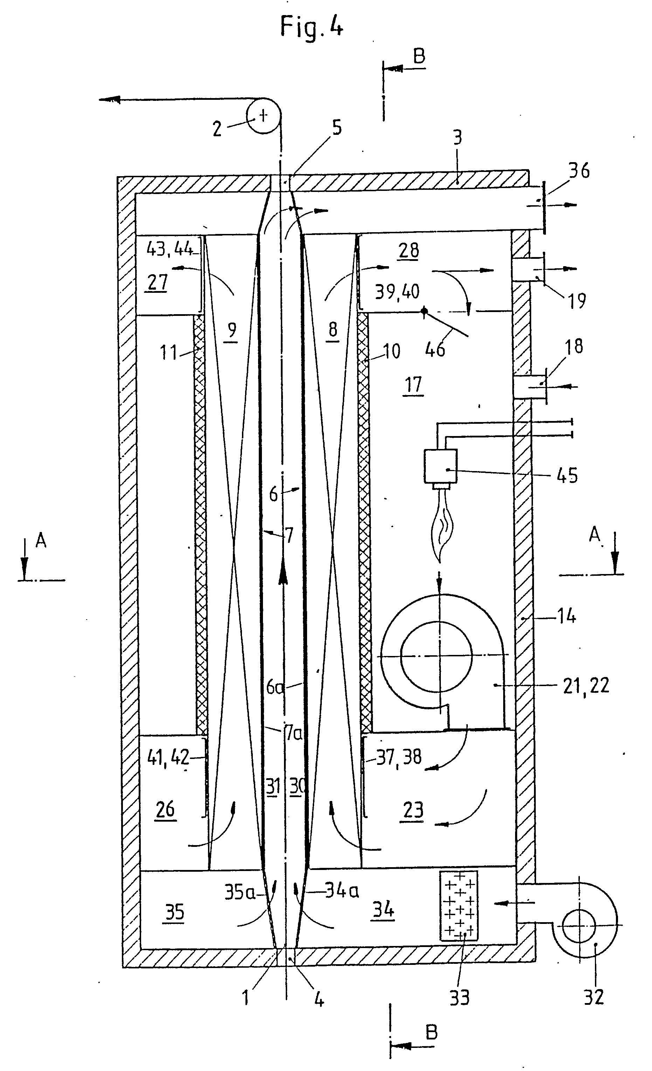

Wie Fig. 3 und 4 zeigen, sind sowohl an den unten dargestellten Eingängen der Heißgaskanäle 8 als auch an den oben dargestellten Ausgängen der Heißgaskanäle 8 Ventilklappen beziehungsweise Ventilschieber 37-40 vorgesehen, mit denen die Heißgaskanäle 8 ganz oder teilweise verschließbar sind. Entsprechende Ventilklappen 41-44 sind auch für die Heißgaskanäle 9 vorgesehen. Mittels dieser Ventilklappen beziehungsweise Ventilschieber 37-44 ist es möglich, das Volumen pro Zeiteinheit beziehungsweise die Geschwindigkeit der die Heißgaskanäle 8,9 durchströmenden Heißgase und damit die Strahlungsleistung der Infrarotstrahler 6,7 über deren Breite zu steuern.

Sofern im Unterschied zum Ausführungsbeispiel der Fig. 3 und 4 solche Ventilschieber 37-44 nicht vorgesehen sind aber auch zusätzlich, läßt sich die Temperatur der Heißgase und damit auch die Strahlungsintensität der Infrarotstrahler 6,7 über deren Breite dadurch steuern, daß die Heißgase von der Rückseite der Heißgaskanäle 8,9 aus über die Breite unterschiedlich stark beheizt werden. Dies ist beispielsweise mittels einzelner, die Rückwand der Heißgaskanäle 8,9, in diesem Fall eine wärmeleitende Rückwand, beaufschlagender Brenner möglich, die individuell oder gruppenweise in Betrieb genommen werden können, um die Heißgaskanäle einzeln oder gruppenweise aufzuheizen. Diese Brenner können auch der Nachbeheizung dienen, wenn sie in Laufrichtung der Materialbahn 1 versetzt sind.

Das Ausführungsbeispiel der Fig. 4 unterscheidet sich von dem der Fig. 1 darin, daß anstelle eines Wärmetauschers 18 ein Brenner 45 vorgesehen ist. Bei Verwendung eines Vormischbrenners läßt sich der Sauerstoffgehalt der zirkulierenden Heißgase in weiten Grenzen regeln. Ein weiterer Unterschied besteht noch darin, daß die Sammelräume 26.28 nicht zur als Brennkammer ausgestalteten Kammer 17 offen sind, sondern nur über eine einstellbare Klappe 46 mit der Brennkammer 17 verbunden sind. Durch die einstellbare Klappe 46 sowie die Druckverhältnisse an den Ein- und Auslässen 18.19 läßt sich das Verhältnis von Umluft zu Abluft einstellen. Diese Möglichkeit der Einstellung des Verhältnisses von Umluft zu Abluft ist insbesondere dann vorteilhaft, wenn der Trockner zwecks Anreicherung und Rückgewinnung von Lösungsmitteln mit inertisierter Luft oder mit Abgas betrieben wird.

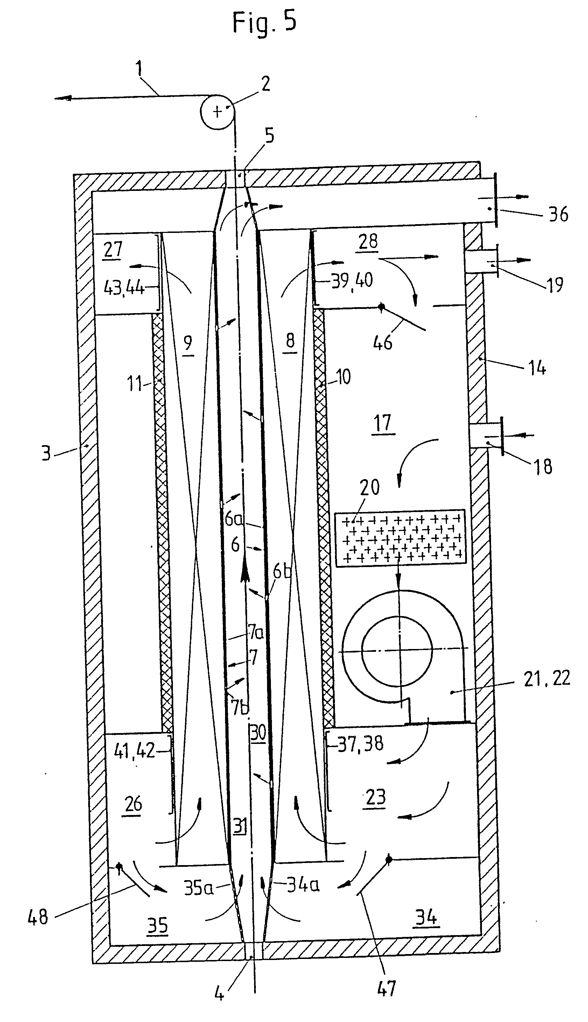

Das Ausführungsbeispiel der Fig. 5 unterscheidet sich von den Ausführungsbeispielen der Figuren 1 bis 4 darin, daß anstelle des Frischlufteinlasses 32 mit dem Gebläse und des Wärmetauschers 33 zur Aufheizung der in die Zwischenräume 30,31 einzuleitenden Luft die Verteilerräume 34,35 über einstellbare Klappen 47,48 mit den Verteilerräumen 24,26 verbunden sind. Ein weiterer Unterschied besteht noch darin, daß in den Abstrahlplatten 6a,7a der Infrarotstrahler 6,7 Düsenöffnungen 6b,7b vorgesehen sind, aus denen schräg gegen die Materialbahn 1 gerichtete Blasstrahlen aus Heißluft austreten. Die Blasstrahlen werden durch auf die Düsenöffnungen aufgesetzte Düsen, in der Zeichnung nicht dargestellt, vergleichmäßigt und gerichtet. Diese Düsen können in an sich bekannter Weise durch Fremdbelüftung betrieben werden.

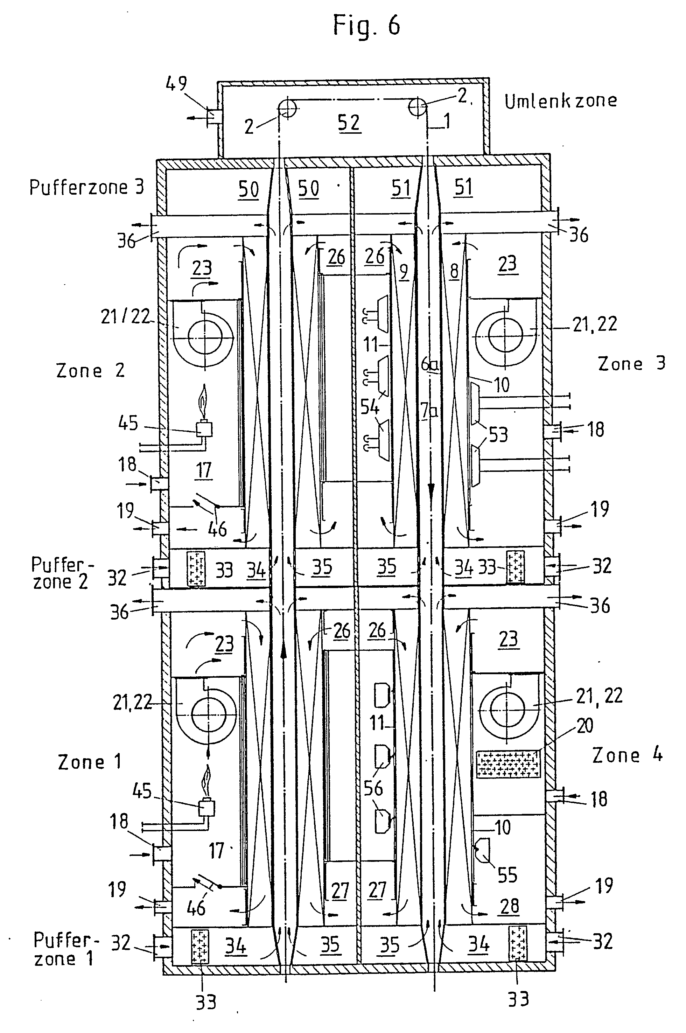

Beim Ausführungsbeispiel der Fig. 6 sind die Zonen eines Vertikaltrockners für eine Materialbahn 1 mit einem aufwärts und einem abwärts führenden Materialbahnstrang von den beschriebenen verschiedenen Ausführungsbeispielen gebildet, um die Materialbahn auf ihrem Weg durch den Trockner optimal wärmezubehandeln und/oder zu trocknen.

In den Zonen 1 und 2 sind entsprechend dem Ausführungsbeispiel der Fig. 4 Trockner vorgesehen, bei denen das zirkulierende Medium mit einem Brenner 45 aufgeheizt wird. An einer Pufferzone 1 wird völlig getrennt vom zirkulierenden gasförmigen Medium über den Frischlufteinlaß 32 und den Wärmetauscher 33 Luft, insbesondere Heißluft in die Zwischenräume 30,31 eingespeist. An einer Pufferzone 2 wird durch Absaugung der mit flüchtig gewordenen Stoffen beladenen Heißluft aus diesen Zwischenräumen 30,31 der Zone 1 und durch Einführung von Luft, insbesondere Heißluft in die Zwischenräume 30,31 der Zone 2 die strömungstechnische Trennung der Zonen 1 und 2 vollzogen. Diese Trennung gelingt bei einer Abstimmung der jeweils über den Einlaß 32 ein- und über den Auslaß 36 ausgeschleusten Luftströme der Zonen 1 und 2.

In einer Pufferzone 3 wird durch Absaugen von Abluft über den Auslaß 49 und Einführen von Luft aus der Umlenkzone 52 in Ausgleichskammern 50,51 die Zone 2 von der Umlenkzone 52 strömungstechnisch getrennt. In der Umlenkzone 52 wird die Materialbahn 1 über Umlenkrollen geführt.

Die in der Zone 3 eingesetzten Infrarotstrahler 6,7 für die Wärmebehandlung und/oder Trocknung der Materialbahn 1 weichen von den ausschließlich von dem die Kanäle durchströmenden Heißgas beheizten Infrarotstrahlern 53,54 der dargestellten anderen Ausführungsbeispiele insofern ab, als die Platten 10,11 der Heißgaskanäle 8,9 zusätzlich mit energiereicher Infrarotstrahlung, die zum Beispiel von gasbeheizten Infrarotstrahlen 53,54 erzeugt wird, beheizt werden. Bestehen die Abstrahlplatten 6a,7a und die Rückwände 10,11 der Infrarotstrahler 6,7 aus wärmeleitendem Material und sind die Abstrahlplatten 6a,7a und die Rückwände 10,11 wärmeleitend über wärmeleitende Trennwände 12,13 verbunden, dann läßt sich über die Länge der Infrarotstrahler 6,7 eine gleichmäßig hohe Strahlertemperatur in Richtung der Materialbahn einhalten. Sofern sowohl die Abstrahlplatten 6a,7a als auch die Platten 10,11 aus infrarotdurchlässigem Glas oder feinmaschigen Sieben bestehen, dann wird ein großer Teil der energiereichen Infrarotstrahlung der Infrarotstrahler 53,54 direkt auf die Materialbahn 1 auftreffen und die Materialbahn 1 in der gewünschten Weise beeinflussen. Durch das feinfühlige Einstellen der Strömungsverhältnisse in den Heißgaskanälen 8,9 im Zusammenwirken mit den gasbeheizten Infrarotstrahlern 53,54 ist eine sehr genaue Strahlungs- und Temperaturverteilung über die Breite und Länge auf der Materialbahn 1 zu realisieren.

Die in der Zone 4 vorgesehene Vorrichtung entspricht im wesentlichen derjenigen des Ausführungsbeispiels der Fig. 1. hier jedoch als Kühlzone eingesetzt. Es wird kaltes Gas in die Heißgaskanäle der Infrarotstrahler 6,7 eingeblasen, welches sich auf seinem Weg in oder entgegen der Laufrichtung der Materialbahn aufwärmt. Durch die an die wärmeleitenden Rückwände 10,11 der Infrarotstrahler 6,7 angebrachten Kühldüsen 55, 56 wird das in den Kanälen 8,9 strömende Gas von der Rückseite her immer wieder abgekühlt, so daß in Richtung des Laufs der Materialbahn 1 die gewünschte Kühlwirkung eingestellt werden kann. Zur Unterstützung dieses Effektes wird bei Bedarf in die Zwischenräume 30,31 ebenfalls ein gekühltes Gas eingeleitet, das zusätzlich eventuell freiwerdende flüchtige Substanzen abführt und eine Kondensation derselben auf der Warenbahn verhindert.

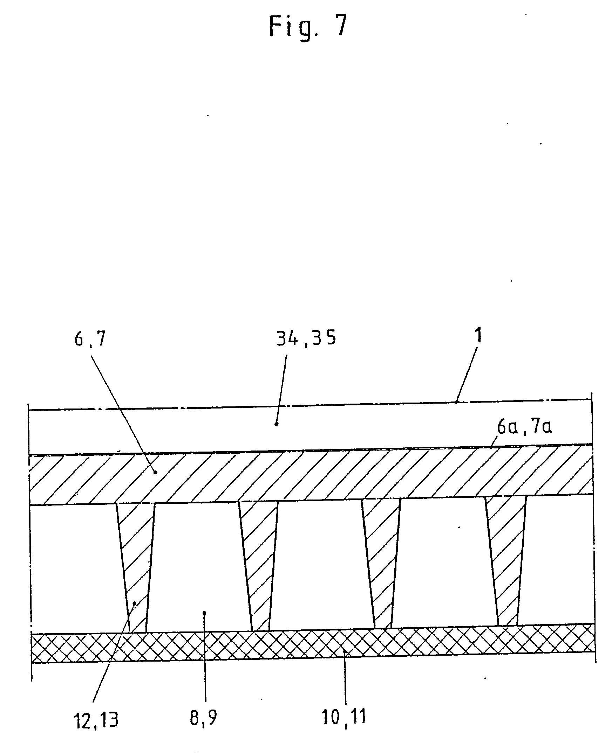

Die Figuren 7,8 und 9 zeigen im Detail dargestellte

Infrarotstrahler 6,7. Die Abstrahlplatte 6a,7a strahlt durch den Zwischenraum 34,35 auf die Materialbahn 1. Die Kanäle 8,9 werden durch die geregelte Heißluft beziehungsweise Kaltluft durchströmt. Auf der Rückseite befinden sich die Platten 10,11. Die Trennwände 12,13 sind je nach Fertigungsart verschieden gestaltet.

Fig. 7 zeigt eine Ausführung, die besonders günstig für die Herstellung durch Gießen geeignet ist. Die Trennwände 12,13 sind konisch gestaltet. Für die Dimensionierung der Trennwände 12,13 kann man sich der in der Fachliteratur aufgestellten Regeln (Die Wärmeübertragung durch Rippen, Zeitschrift VDI, Bd. 70, 1926, Seite 885 - 889 und 947 -951) bedienen. Die Rückseite 10,11 kann aus Isoliermaterial bestehen oder bei zusätzlicher Heizung oder Kühlung von der Rückseite her aus wärmeleitendem Material.

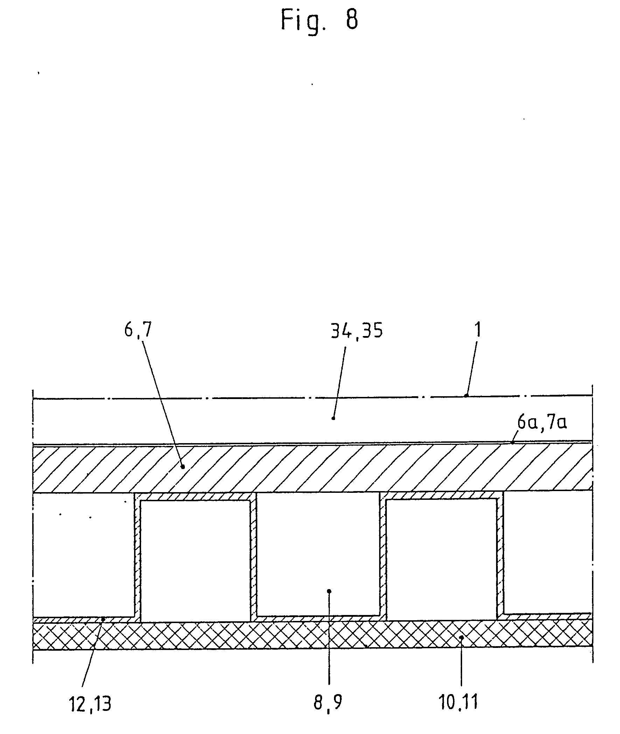

Fig. 8 zeigt eine Blechkonstruktion, also eine mögliche Ausführung, bei der die Trennwände besonders preisgünstig herzustellen sind. Der Kontakt und damit der Wärmeübergang zwischen Trennwänden und begrenzenden Platten ist aber weniger gut als bei der gegossenen Konstruktion.

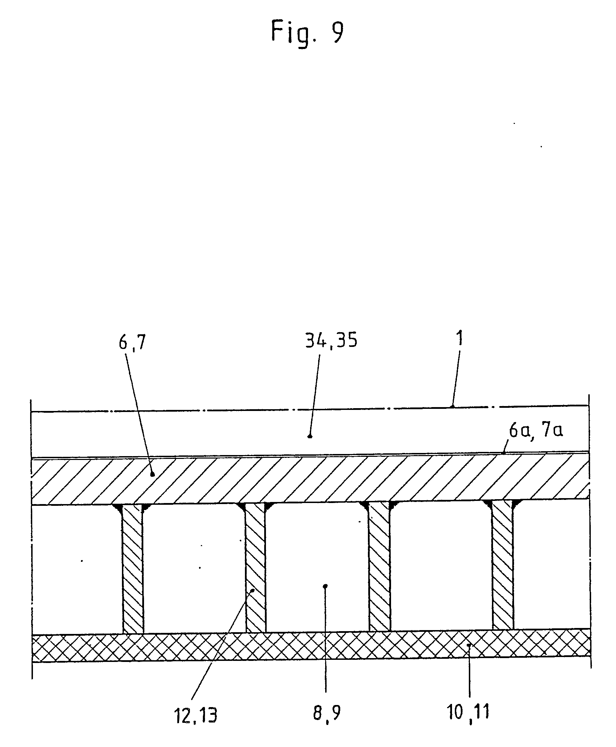

Fig. 9 zeigt eine Schweißkonstruktion. Diese relativ preiswerte Lösung bringt dann homogene Abstrahlungswerte, wenn die Trennwände wärmeleitend auf die Abstrahlplatte geschweißt werden.

## Ansprüche

1. Vorrichtung zur Wärmebehandlung und/oder Trocknung einer Materialbahn (1), bestehend aus Führungs- und Transportmitteln (2) für die Materialbahn (1), aus zu einer oder beiden Seiten der Materialbahn (1) mit Abstand von ihr angeordneten und sich über deren Breite und in deren Längsrichtung erstreckenden Infrarotstrahlern (6,7), die von auf den Rückseiten ihrer Abstrahlplatte (6a,7a) angeordneten, heizmitteldurchströmten und in der Heizleistung einstellbaren Kanälen (8,9) beheizbar sind, **dadurch gekennzeichnet,** daß die Kanäle (8,9) als Heißluftkanäle ausgebildet und eine Vielzahl solcher Heißluftkanäle parallel zueinander und in Durchlaufrichtung der Materialbahn (1) verlaufend vorgesehen sind und daß den Heißluftkanälen (8,9) Steuerungsmittel (37-44), mit denen die Strömungsgeschwindigkeit und/oder die Temperatur der Heißluft in den einzelnen Heißluftkanälen (8,9) einstellbar ist, und/oder an deren Rückseiten angeordnete Heiz- (53,54) oder Kühleinrichtungen (55,56) zugeordnet sind, die in ihrer Heiz- bzw. Kühlleistung einstellbar sind.

2. Vorrichtung nach Anspruch 1, **dadurch gekennzeichnet,** daß an den Ein- und /oder Ausgängen der Heißgaskanäle (8,9) einzeln ansteuerbare Ventile (37-44) vorgesehen sind.

3. Vorrichtung nach Anspruch 1 oder 2, **dadurch gekennzeichnet,** daß den Heißgaskanälen (8,9) Heiz- (53,54) und/oder Kühleinrichtungen (55,56) vor und/oder hinter den eingangsseitigen Ventilen (37,38,41,42) zugeordnet sind, mit denen die Heißgase aufheizbar und/oder abkühlbar sind.

4. Vorrichtung nach einem der Ansprüche 1 bis 3, **dadurch gekennzeichnet,** daß als Heizeinrichtungen (53,54) an den Rückwänden (10,11) der Heißgaskanäle (8,9) wirksame Infrarotstrahler, Brenner oder Wärmetauscher vorgesehen sind.

5. Vorrichtung nach einem der Ansprüche 1 bis 3, **dadurch gekennzeichnet,** daß als Kühleinrichtungen (55,56) an den Rückwänden (10,11) der Heißgaskanäle (8,9) wirksame kühlluftbeaufschlagte Düsen oder Kühlschlangen vorgesehen sind.

6. Vorrichtung nach einem der Ansprüche 1 bis 5, **dadurch gekennzeichnet,**daß die die Heißgaskanäle (8,9) begrenzenden vorderseitigen Abstrahlplatten (6a,7a) und/oder Rückwände (10,11) jeweils von einer geschlossenen Wand oder einem feinmaschigem Sieb gebildet sind.

7. Vorrichtung nach Anspruch 6, **dadurch gekennzeichnet,** daß die geschlossene Wand beziehungsweise das feinmaschige Sieb aus Stahl, Keramik oder Glas besteht.

8. Vorrichtung nach einem der Ansprüche 1 bis 7, **dadurch gekennzeichnet,** daß für die Abstrahlplatte (6a,7a) ein Material mit einer Oberfläche eingesetzt ist, dessen im Bereich des langwelligen Infrarots liegende Strahlung der idealen Strahlung eines grauen Körpers möglichst nahe kommt.

9. Vorrichtung nach einem der Ansprüche 6 bis 8, **dadurch gekennzeichnet,** daß bei einer die Abstrahlplatte (6a,7a) und zugleich die Vorderwand der Heißgaskanäle (8,9) bildenden geschlossenen Wand sich in Längsrichtung durch die Heißgaskanäle (8,9) erstreckende, mit der Vorderwand wärmeleitend verbundene Stege (Rippen 12,13) aus wärmeleitendem Material vorgesehen sind.

10. Vorrichtung nach Anspruch 9, **dadurch gekennzeichnet,**daß die Stege (12,13) einen konischen Querschnitt haben, dessen breitere Basis mit der Vorderwand verbunden ist.

11. Vorrichtung nach Anspruch 4 und 9 oder 4 und 10,

**dadurch gekennzeichnet,**daß die Rückwände (10,11) der Heißgaskanäle (8,9) wärmeleitend mit den Stegen (12,13) verbunden sind.

12. Vorrichtung nach einem der Ansprüche 1 bis 11,

**dadurch gekennzeichnet,** daß zur Beheizung der den Heißgaskanälen (8,9) zuzuführenden Heißgase eine Brennkammer (17) oder ein Wärmetauscher (19) vorgesehen ist.

13. Vorrichtung nach einem der Ansprüche 1 bis 12,

**dadurch gekennzeichnet,** daß die Heißgaskanäle (8,9) in einem Heißgaskreis mit der Brennkammer (17) beziehungsweise dem Wärmetauscher (19) liegen.

14. Vorrichtung nach einem der Ansprüche 1 bis 13,

**dadurch gekennzeichnet,** daß der Zwischenraum (30,31) zwischen dem Infrarotstrahler (6,7) und der Materialbahn (1) als Kanal ausgebildet ist, dessen Eingang mit einer Quelle (39) für mit Schadstoffen und dergleichen beladbares Gas, insbesondere Frischluft, und deren Ausgang mit einem Abluftausgang (36) verbunden sind.

15. Vorrichtung nach Anspruch 14,

**dadurch gekennzeichnet,** daß von dem Ausgang der Brennkammer (17) beziehungsweise des Wärmetauschers (19) eine Abzweigung zu dem Eingang des einen Kanal bildenden Zwischenraums (30,31) zwischen den Infrarotstrahlern (6,7) und der Materialbahn (1) führt.

16. Vorrichtung nach Anspruch 14,

**dadurch gekennzeichnet,** daß der Eingang des einen Kanal bildenden Zwischenraums (30,31) zwischen den Infrarotstrahlern (6,7) und der Materialbahn (1) mit einer Kammer (34,35) verbunden ist, deren Atmosphäre durch einen Brenner oder einen Wärmetauscher (33) vorgewärmt oder gekühlt ist.

17. Vorrichtung nach einem der Ansprüche 1 bis 16,

**dadurch gekennzeichnet,** daß in dem von der Materialbahn (1) und den Infrarotstrahlern (6,7) gebildeten Zwischenraum (30,31) beidseitig der Materialbahn (1) und in deren Durchlaufrichtung verteilt angeordnete, die Materialbahn (1) beaufschlagende Blasdüsen (6a,7a) vorgesehen sind.

## Fig. 1

# Fig. 2

Schnitt A-A nach Fig. 1

## Fig. 3
Schnitt B-B nach Fig. 1

# Fig. 4

# Fig. 5

Fig. 6

EP 0 336 120 A2

# Fig. 7

## Fig. 8

# Fig. 9